Europäisches Patentamt

European Patent Office

Office européen des brevets

(19)

(11) **EP 1 359 697 A1**

(12) **EUROPEAN PATENT APPLICATION**

(43) Date of publication:
05.11.2003 Bulletin 2003/45

(51) Int Cl.⁷: **H04L 1/20**, H04L 1/24

(21) Application number: 02253030.7

(22) Date of filing: 30.04.2002

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Psytechnics Ltd**
**Ipswich, Suffolk IP1 1HN (GB)**

(72) Inventors:
• **Barrett, Paul Alexander**
  **Suffolk, IP5 3SN (GB)**

• **Rix, Antony William**
  **Cambridge CB1 3PU (GB)**

(74) Representative: **Simons, Alison Diane et al**
  **Dummett Copp**
  **25 The Square**
  **Martlesham Heath**
  **Ipswich, Suffolk, IP5 3SL (GB)**

(54) **Method and apparatus for transmission error characterisation**

(57)     This invention relates to measurement of error characteristics of a communication channel. It is of particular use for measuring perceived transmission performance of the communication channel. The invention provides a method and apparatus for measuring transmission error characteristics of a communications channel employing forward error correction, in which the following steps are repeatedly performed: transmitting a coded data sequence comprising a sequence of symbols corresponding to a known data sequence via said communications channel; receiving a possibly degraded version of said coded data sequence via said communications channel to provide a received data sequence at a receiver; generating a coded data sequence corresponding to said known data sequence at the receiver to provide a generated sequence at the receiver; comparing the generated sequence to the received sequence to provide error characterisation information comprising a sequence of symbols; and updating a statistical representation of the transmission error characteristics according to said error characterisation information. The invention also provides a method and apparatus for measuring perceived transmission performance of a communications channel in which the perceived transmission performance is generated according to measured transmission error characteristics.

Fig. 2

## Description

This invention relates to measurement of error characteristics of a communication channel. The invention is of particular use for measuring perceived transmission performance of the communication channel.

Signals carried over telecommunications links can undergo considerable transformations, such as digitization, compression, encryption and modulation. They can also be distorted due to the effects of transmission errors. It is highly desirable to be able to determine the combined effect of such transformations and transmission errors on the quality of the received signal as perceived by a human.

Two of the most common sources of transmission error in digital communication systems are symbol errors and bad frames.

Symbol errors occur when a transmitted symbol is incorrectly decoded by a receiver. Many transmission schemes include forward error correction (FEC) techniques that allow a limited number of transmission errors to be corrected. The symbol errors that are introduced by the transmission link are commonly called raw errors, whilst errors that remain after the application of FEC decoding are commonly called residual errors.

Bad frames are frames of data that contain symbol errors that have been detected, but not corrected. The error detection mechanism may be a by-product of an FEC scheme or the result of a specific checksum calculation. In some schemes, a frame of data is classified as bad if an error is detected in any symbol position. In other schemes, a frame is only classified as bad if errors are detected in particular symbol positions within the frame. This latter technique is often used in unequal error protection (UEP) transmission schemes.

UEP is frequently employed in speech or video transmission systems where the contribution of a symbol to the perceived quality of the transmission depends upon its position within a frame. The error protection scheme is said to be unequal if more powerful FEC is applied to the most important symbol positions at the expense of weaker protection of less important symbol positions. Groups of symbols that receive the same level of FEC are said to belong to the same symbol class. UEP schemes typically only provide a checksum for the most important symbols, and hence only those frames received with a residual error in one or more of the most important symbol positions are classified as bad frames. This approach has been found to yield better overall transmission quality in systems where the presence of residual errors in the least important symbols is, on average, less deleterious than the effect of discarding every frame that contains one or more residual errors. A good example of such a UEP scheme is that specified for the global system for mobile communications (GSM) adaptive multi-rate (AMR) speech service in European Telecommunications Standardisation Institute (ETSI) technical specification GSM 05.03.

For any checksum, there is a finite probability that the checksum will be valid for a corrupted frame. For very short checksum lengths, this probability can become significant and undetected bad frames can become a problem. In this situation, it is common to implement additional bad frame detection techniques - many examples being based on the internal variables of a Viterbi FEC decoder. Such additional checks only indicate the probability that a frame is corrupted, and may therefore be classified differently to an invalid checksum. In a variation of bad frame classification, the AMR speech service described in the ETSI GSM specifications provides a class for frames with uncorrupted Class 1 bits (the most important bits) and the possibility of errors in the Class 2 bits (which are not protected by the checksum).

In a typical implementation, received frames are passed to a signal decoder along with classification information. This may be a simple good/bad frame classification or a more sophisticated multi-level classification as described above. The signal decoder will be designed to take appropriate action depending on the frame classification. One solution to the receipt of bad frames in a speech system, or to non receipt of frames, is to mute the output of the signal decoder for the period corresponding to the missing data. A more effective solution frequently used in code excited linear predictor (CELP) speech decoders is to repeat the last known value of parameters that are known to change slowly, such as pitch and linear predictor coefficients, and to synthesise random values for the other parameters, such as the stochastic codebook index. A strategy used in video decoders it to simply freeze the output. Such techniques are commonly called error concealment in the art.

Objective processes for the purpose of measuring the perceived quality of a signal are currently under development and are of application in equipment development, equipment testing, and evaluation of system performance.

A number of patents and applications relate to this field, for example, European Patent 0647375, granted on 14th October 1998. In this invention two initially identical copies of a test signal are used. The first copy is transmitted over a communications system under test. The resulting signal, which may have been degraded, is compared with a reference copy to identify audible errors in the degraded signal. These audible errors are assessed to determine their perceived significance - that is, errors that are considered significant by human listeners are given greater weight than those that are not considered so significant. In particular inaudible errors are irrelevant to perception and need not be assessed.

This system provides an output comparable to subjective quality measures originally devised for use by human subjects. More specifically, it generates two values, $Y_{LE}$ and $Y_{LQ}$, equivalent to the "Mean Opinion Scores" (MOS) for "listening effort" and "listening quality", which would be given by a panel of human listeners when listening to the same signal. The use of an automated system allows for more consistent assessment than human assessors could achieve, and also allows the use of compressed and simplified test sequences, which give spurious results when used with human assessors because such sequences do not convey intelligible content.

In the patent specification referred to above, an auditory transform of each signal is taken, to emulate the response of the human auditory system (ear and brain) to sound. The degraded signal is then compared with the reference signal after each has been transformed such that the subjective quality that would be perceived by a listener using the network is determined from parameters extracted from the transforms.

Such automated systems require a known (reference) signal to be played through a distorting system (the communications network or other system under test) to derive a degraded signal, which is compared with an undistorted version of the reference signal. Such systems are known as "intrusive" measurement systems, because whilst the test is carried out the channel under test cannot, in general, carry live traffic.

Measurement systems that do not require a reference signal are known as "non-intrusive". A description of such a system is provided in the literature (Non-intrusive speech quality assessment using vocal-tract models, Gray P.; Hollier M.P.; and Massara. R.E.; IEE Proceedings - Vision, Image and Signal Processing, 147 (6), 493-501, December 2000.). Such systems are not, in general, as accurate as intrusive measurement systems but have the advantage that they can be used on revenue earning traffic.

German patent application DE 4324292 discloses the measurement of a bit error rate (BER) over a period of time, the formation of a statistical representation therefrom, and the use of a transform to map the statistical representation to a measure of the speech quality of a digital mobile radio system. The invention is characterised by the fact that the mapping is derived from the results of subjective experiments. The application discloses the derivation of speech quality based on the analysis of BER and the use of the mean, standard deviation and probability distribution of a plurality of bit error measurements. Patent application DE 4324292 does not address UEP and does not describe the use of residual bit errors or the results of a frame classification algorithm. The only specific means of generating the required bit error information described in the embodiment and claims of DE 4324292 is the RXQUAL parameter produced by GSM systems. RXQUAL is a coarse estimate of BER prior to channel decoding measured over a period of 480 ms (in other words the raw BER). However, it is known that the ability of a FEC decoder to correct errors depends on the bit-by-bit burst characteristics of the raw errors. Such detailed burst information is lost in the averaging over 10,944 bits performed in the RXQUAL calculation, and the embodiment described in DE 4324292 is unlikely to provide a reliable estimate of speech quality across a wide range of radio propagation conditions. This conclusion is confirmed in the literature (Radio link parameter based speech quality index-SQI; Karlsson, A.; Heikkila, G.; Minde, T.B.; Nordlund, M.; Timus, B.; Wiren, N; Proceedings of ICECS '99. The 6th IEEE International Conference on Electronics, Circuits and Systems, Volume: 3 , 1999 Page(s): 1569 -1572 vol.3).

US patent application US 6157830 discloses an arrangement whereby radio link parameters are converted into a set of temporal parameters that are combined to yield a set of correlated parameters that are in turn mapped into a speech quality measure by means of an estimator. This patent discloses the derivation of temporal parameters from measures of raw BER over 0.5 second intervals, the mean frame erasure rate calculated over a 5 second interval and the calculation of the number of consecutive frame erasures in a 5 second interval. The patent goes on to disclose the statistical analysis of the temporal parameters, providing maximum value, minimum value, mean value, standard deviation, skewness, and kurtosis as examples. The application also discloses the use of a parameter that is set to zero during frame erasures and to the raw BER at all other times. Although this parameter is referred to as residual bit error rate or RBER in US 6157830, this definition is distinct from the concepts of residual bit errors and residual symbol errors used in the present patent application; the latter referring to errors in the data sequence after FEC decoding. Patent application US 6157830 does not address UEP.

International patent application WO 01/97414 describes a method of determining the perceived quality of a speech transmission system by using a measure of link quality to retrieve a previously stored perceived quality score calculated for the same link quality. The pre-calculation of the perceived quality score for a given link quality is performed by: 1) using a description of the link quality to degrade a copy of a test signal; 2) deriving the corresponding perceived quality score by using an intrusive objective speech quality measurement algorithm to compare the degraded version of the test signal with an undegraded version. WO 01/97414 discloses that bit error rate, packet delay variation, and packet loss characteristics (number of packets lost and any pattern to them) are suitable measures of the link quality for mapping to a perceived quality score, but does not provide any specific description of statistical representations of these parameters.

International patent application WO 01/93470 describes a means of measuring the error performance of a transmission link and converting this measurement into a perceived quality measure. According to this invention transmission errors are identified by transmitting a known data sequence during idle periods, for example when the user of a speech transmission system is not speaking, and comparing the received data sequence with a copy of the original data sequence to provide error information. This scheme can be used to derive accurate information about both raw and residual errors. A perceived quality score is derived for the transmission link by using the error information to produce a reference and degraded signal pair that can be compared using an intrusive speech quality measurement algorithm.

International patent application WO 96/17454 discloses a system for testing the transmission quality of digital communication system by means of transmitting a known sequence and comparing the resulting received sequence with a copy of the original. The claims are restricted to the generation of variable rate test sequences under the control of a model of human speech. The application addresses the generation of objective measures of transmission quality, for example bit error rate and frame error rate, stating that such measures are preferable to perceived measures of performance.

European patent application EP 01307738.3 discloses an arrangement for deriving a measure of the perceived transmission quality of a communication system whereby measurements of actual transmission errors are compressed using a statistical representation so that the information may be transmitted to a remote location for further analysis, comprising the steps of degrading a test signal and using an intrusive speech quality measurement algorithm to compare the degraded signal with an undegraded copy. The application discloses the generation and transmission of a statistical representation of residual errors, raw errors, and soft decision values. (Soft-decision values indicate the likelihood that a symbol has been received in error and can be produced by a demodulator in addition to the value of each received symbol.) Specific statistical representations described are the number of residual errors in each symbol class for a single frame and a sample distribution of soft decision values for a single frame.

The arrangement described in EP 01307738.3 addresses the situation where it is necessary to generate a measure of the perceived quality at a remote location separated by a transmission link with a lower bandwidth than that of the communication system under test. The example application provided is the use of a speech quality measurement algorithm located in the fixed infrastructure of a mobile radio network to analyse the performance of the downlink (base station to mobile station). The data compression provided by the statistical representation of the error characteristic for each sampled frame allows the information to be protected against transmission errors using powerful FEC techniques.

The present invention provides improvements over the above discussed prior art techniques by providing a means of representing a statistical representation of transmission error characteristics in a form that retains sufficient information to derive therefrom a useful estimate of the perceived quality provided by the channel under test. The present invention has applications in, but not limited to, perceived quality measurement systems where transmission error information must be either stored in limited memory, for example in a mobile station, or transmitted over a very limited bandwidth, for example in a fixed length signalling message. Hence, instead of generating a statistical representation for each sampled frame as described in EP 01307738.3, error measurements from sampled frames are used to update a statistical representation of the transmission performance over a period in time that is stored in memory. This approach has the advantage that the number of symbols required to store the final statistical representation can be independent of the amount of data used to generate the statistical representation and hence the time period over which the channel is measured. The scope of the present invention includes, but is not limited to, the transmission of speech, audio and/or video signals for the purposes of two-way communication and/or one-way streaming.

According to the invention there is a method of measuring transmission error characteristics of a communications channel employing forward error correction, comprising the steps of

a) transmitting a coded data sequence comprising a sequence of symbols corresponding to a known data sequence via said communications channel;
b) receiving a possibly degraded version of said coded data sequence via said communications channel to provide a received data sequence at a receiver;
c) generating a coded data sequence corresponding to said known data sequence at the receiver to provide a generated sequence at the receiver;
d) comparing the generated sequence to the received sequence to provide error characterisation information comprising a sequence of symbols ; and
e) updating a statistical representation of the transmission error characteristics according to said error characterisation information wherein steps a) to e) are performed at least twice.

It is an advantage if the statistical representation comprises a number of symbols which is independent of the number of sequences used to generate said statistical representation.

The statistical representation can be used to represent errors for a plurality of classes. Therefore if the symbols of the error characterisation information are divided into one or more classes then the statistical representation may comprise a first set of one or more members, each member of the first set relating to errors occurring in an associated class.

In a preferred embodiment the errors a represented using a sample distribution, therefore a member of the first set comprises a sample distribution representing the distribution of the number of residual symbol errors occurring in the class associated with said member. The errors may also be represented using a rate factor corresponding to the number or proportion of symbols errors in the class associated with said member.

In a frame based transmission system, the statistical representation may advantageously include information relating to errors in received frames. In the case the method further comprises the steps of

f) receiving a frame via said communications channel

g) classifying the frame according to errors in the frame to provide a frame classification;

h) updating the statistical representation of the transmission error characteristics according to said frame classification, wherein steps f) to h) are preformed at least twice.

The received frames may comprise data which is the same as or data which is different from the coded data sequence received at step b).

Preferably the statistical representation comprises a second set of one or more members, each member of the second set relating to an associated classification.

In a preferred embodiment the number of consecutive frames having a particular classification are represented using a sample distribution, therefore a member of the second set comprises a sample distribution representing the distribution of the number of consecutive frames which are classified as having the frame classification associated with said sample distribution and in which said frame classification is used to update the sample distribution of the set related to said frame classification. Frames having a particular classification may also be represented using a rate factor corresponding to the number or proportion of frames which are classified as having the frame classification associated with said member

It is an advantage if the method further comprises the step of generating a compressed statistical representation in dependence upon said statistical representation. The compressed statistical representation may be generated using normalisation or quantisation or by using a lossless compression technique, for example.

The transmission error characteristics may be stored locally, or may be processed elsewhere, in which case the method also comprises the step of transmitting the statistical representation or the compressed statistical representation of the transmission error characteristics to a receiver.

According to another aspect of the invention there is also provided a method of measuring perceived transmission performance of a communications channel comprising the steps of measuring transmission error characteristics as described previously; and generating the perceived transmission performance according to the transmission error characteristics.

In one preferred embodiment the generating step comprises the sub steps of degrading a test data sequence according to said transmission error characteristics to provide a degraded test data sequence; and generating the perceived transmission performance according to said degraded test data sequence. Preferably the generating sub step comprises the sub step of comparing the test data sequence with the degraded test data sequence.

In a second preferred embodiment the generating step comprises the sub step of retrieving a pre-calculated measure of perceived transmission performance from a store relating measures of perceived transmission performance to statistical representations of transmission error characteristics.

According to another aspect of the invention there is provided an apparatus for measuring transmission error characteristics of a communications channel employing forward error correction comprising a receiver arranged to receive a possibly degraded version of a coded data sequence comprising a sequence of symbols corresponding to a known data sequence transmitted via said communications channel to provide a received data sequence; means arranged to generate a coded data sequence corresponding to said known data sequence at the receiver to provide a generated sequence; a comparator arranged to compare the generated sequence to the received sequence to provide error characterisation information comprising a sequence of symbols ; and means arranged to update a statistical representation of the transmission error characteristics according to said error characterisation information.

In a preferred embodiment the apparatus further comprises a receiver arranged to receive a frame via said communications channel, a classifier arranged to classify the frame according to errors in the frame to provide a frame classification; and means arranged to update the statistical representation of the transmission error characteristics according to said frame classification.

Advantageously the apparatus further comprises means arranged to generate a compressed statistical representation in dependence upon said statistical representation.

According to a further aspect of the invention, there is provided an apparatus for measuring perceived transmission performance of a communications channel comprising an apparatus for measuring transmission error characteristics of a communications channel employing forward error correction, as described previously, and means arranged to receive said transmission error characteristics and arranged to generate the perceived transmission performance according to the transmission error characteristics.

Embodiments of the invention will now be described with reference to the accompany drawings in which

Figure 1 is a block diagram illustrating a conventional transmitter and a receiver;

Figure 2 is a block diagram illustrating apparatus for measuring channel transmission accuracy; and
Figure 3a and Figure 3b shows examples of sample distributions.

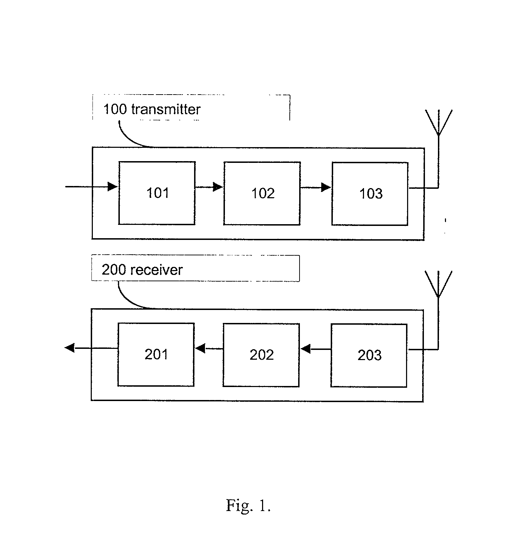

Figure 1 illustrates a simplified diagram of a known communications system comprising a transmitter 100 and a receiver 200. A source encoder 101 encodes a signal into a source encoded data sequence in order to reduce the data rate for a signal to be transmitted, using appropriate compression techniques. The source encoded data sequence is in the form of a sequence of symbols, which may be binary digits (bits), or may be other encoded symbols. An FEC channel encoder 102 further encodes the data sequence so that transmission errors can be detected and corrected by the receiver. The channel encoded data sequence, in general, comprises a greater number of symbols than the source encoded data sequence. The channel encoded data sequence is converted into a radio signal by a modulator 103 and the radio signal is transmitted via a transmission channel to the receiver 200. The received radio signal is converted into a channel encoded data sequence by a demodulator 203. A FEC channel decoder 202 corrects errors in the channel encoded data sequence before sending it to a source decoder 201 along with information about errors that have been detected but not corrected. Finally, the source decoder 201 reconstructs a version of the original signal.

The signal at the output of the source decoder 201 will differ from the original signal at the input to the source encoder 101 if the source coding process is lossy or if the channel decoder 202 is unable to detect or correct symbols received in error by the demodulator 203. Demodulation errors are generally caused by a poor signal-to-noise ratio on the radio channel, due to Raleigh fading, signal attenuation, or interference from other radio sources.

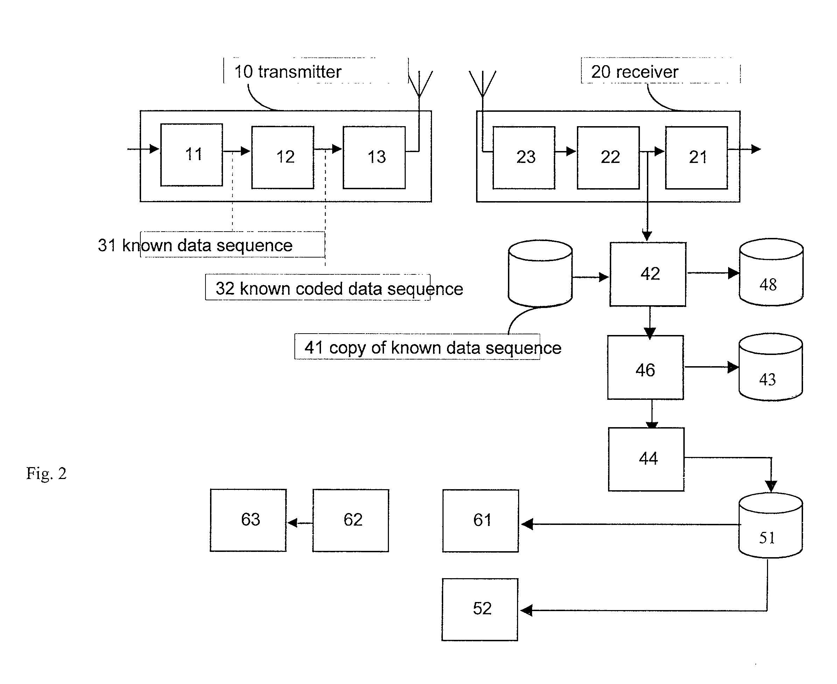

Figure 2 depicts an apparatus for measuring the perceived quality of a communications channel exemplified by that depicted in Figure 1. The communication channel comprises a transmitter 10 and a receiver 20. The transmitter comprises a source encoder 11, a channel encoder 12, and a modulator 13. The receiver comprises a demodulator 23, a channel decoder 22, and a source decoder 21. Means are provided such that a known coded data sequence 32 corresponding to a known data sequence 31 is provided at an input to the modulator 13. Such means include but are not limited to:

- direct insertion of the known coded data sequence 32 at the input to the modulator 13;
- direct insertion of the known data sequence 31 at the input to the channel encoder 12 such that the known coded data sequence 32 is generated at the input to the modulator 13;
- direct insertion of a known data signal at the input to the source encoder 11 such that the known coded data sequence 32 is generated at the input to the modulator 13.

The received data sequence at the output of the channel decoder 22 is compared with a local copy 41 of the known coded data sequence 32 by a comparator 42 to form error characterisation information 48 in the form of an indication of the position of residual bit errors for each sample frame. The error characterisation information may be in the form of bits indicating the presence or absence of an error at a particular position of the frame. More generally the error characterisation information is in the form of symbols representing the probability of an error at a particular position of the frame. The error characterisation information 48 may be stored prior to use by an updating means 46.

Said error characterisation information 48 is used by the updating means 46 to update a statistical representation 43 of the transmission error characteristics of the communication channel under test. Said statistical representation 43 is compressed to reduce the size by a compression unit 44. The compressed statistical representation 51 is stored for further use. For example the compressed statistical representation 51 may be converted to a measure of perceived transmission performance by unit 52, or may be sent by a transmitter 61 to a receiver 62 for conversion to a measure of perceived transmission performance at a remote location by unit 63.

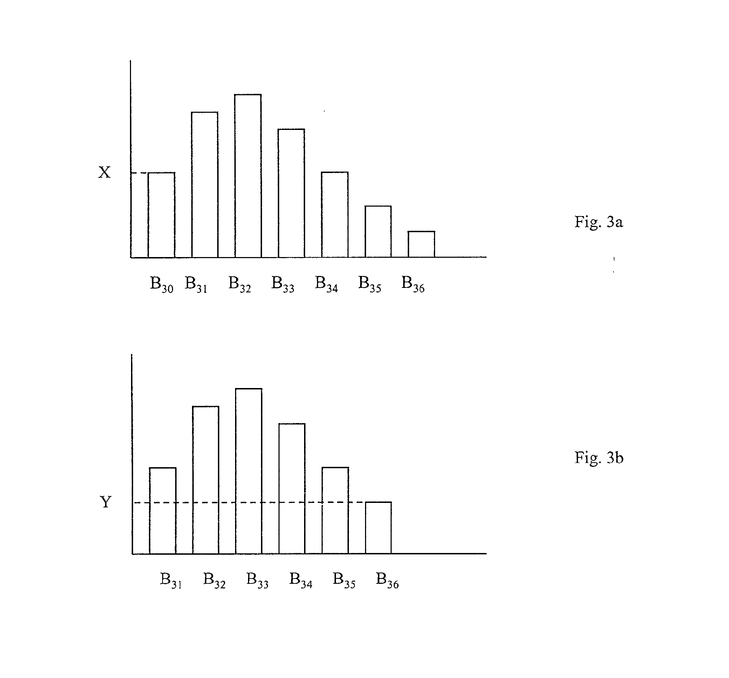

The statistical representation 43 will now be described. In a preferred embodiment of the invention, the statistical representation 43 uses sample distributions, which are known to those skilled in the art of statistics. Examples of sample distributions are provided in Figure 3a and Figure 3b. In the following discussion, each error characterisation symbol sequence used to update a sample distribution is referred to as a 'sample'

Each value in a sample distribution is called a bin, and records the number of samples observed with a value in a particular range. The set of bins that form a sample distribution should ideally collectively represent all possible samples values that will be observed.

According to a preferred embodiment of the invention, the error characterisation information is divided into classes and the statistical representation comprises a sample distribution $\mathbf{E}$ representing the distribution of symbol errors in a particular class of symbols, where the number of residual symbol errors in a given class J is calculated and used to update the corresponding sample distribution $\mathbf{E}_J$ comprising bins $\{B_{J,1}, B_{J,2}, B_{J,3}, ... \}$. The value of bin $B_{J,K}$ represents the number of frames observed with S symbol errors in class J; where S lies within the range associated with the $K^{th}$ bin of the distribution. For example, if the sample distribution of Figure 3a represents sample distribution $\mathbf{E}_3$, and assuming each bin $B_{3,K}$, represents the number of samples observed in class 3 having K symbol errors (bin $B_{3,6}$, representing the number of samples observed in class 3 having 6 or more symbol errors) then it can be seen that X samples have been observed in class 3 having 0 symbol errors

The statistical representation of the transmission error characteristics is formed by the set of one or more sample distributions { $E_1$, $E_2$, ..., $E_M$ } where the error characterisation information is divided into M classes.

The samples used to update the sample distributions should be representative of the channel behaviour during the period of measurement. However, it is not necessary to calculate the number of residual symbol errors for all samples nor is it necessary that the sample distributions for each classes be calculated from the same samples.

In an improved embodiment of the invention the statistical representation includes information relating to a frame classification where frames of received data are classified according to errors occurring in the frame. For example the frame may be classified according to detected errors in the frame and/or the detected probability of errors in the frame.

Methods for performing such a classification include, but are not limited to using:

- a dedicated frame classification mechanism;
- the output of the frame classification mechanism provided by the system under test;
- a modified or processed version of the output of the frame classification mechanism provided by the system under test;
- error characterisation information, for example, residual symbol error information.

The frame classification is used to update the statistical representation. In a preferred embodiment the statistical representation comprises a set of one or more sample distributions, each sample distribution relating to a particular frame classification. In the following discussion, each frame used to update a sample distribution is referred to as a 'sample'.

The frame characterisation L calculated for a sample is used to update a corresponding sample distribution $F_L$ comprising bins { $B_{L,1}$, $B_{L,2}$, $B_{L,3}$, ... }. The value of bin $B_{L,K}$ represents the number of runs of C consecutive samples classified as type L; where C lies within the range associated with the $K^{th}$ bin of the distribution. Since the maximum length of a run of samples is unlimited, it is preferable for one bin to represent the number of runs exceeding a particular length. In this embodiment of the invention the statistical representation of the transmission error characteristics therefore comprises one or more sample distributions { $F_1$, $F_2$, ... }. The statistical representation is updated at the end of each run of frames with the same classification.

For example, if the sample distribution of Figure 3b represents sample distribution $F_3$, and assuming each bin $B_{3,K}$, represents the number occurrences of K consecutive samples (bin $B_{3,6}$, representing the number of occurrences of 6 or more consecutive samples in class 3) then it can be seen that there have been y occurrences of 6 consecutive samples having a frame classification of 3. Note, there is no bin for 0 consecutive samples.

In a special case of the above, sampled frames are classified using a binary bad/good frame decision. In this case, the characterisation of the link quality is formed by the set of the sample distributions $F_1$ and $F_2$, which record the length of runs of consecutive bad and consecutive good frames, respectively.

The statistical representation may also comprise a rate factor, related to either or both of the error classification information, or to the frame classification. The rate factor may comprise $N_L$, the number of sampled frames with a classification L, $N_{TOTAL}$, the total number of frames sampled, or a proportion $N_L/N_{TOTAL}$.. When the rate is associated with the error classification information, rate factor may comprise $N_J$, the number of residual symbol errors observed in class J, $N_{TOTAL}$, the total number of error classification symbol sequences observed, or a proportion $N_J/N_{TOTAL}$ (i. e. the symbol error rate for class J).

The statistical representation may or may not include sample distributions for all possible frame classifications, or for all possible error classes, and a rate factor may be provided as well as or instead of a particular sample distribution.

For example, a statistical representation may include a sample distribution $F_1$, which records the length of runs of consecutive bad frames and a factor $R_1$, the bad frame rate. In another embodiment the statistical representation may include a sample distribution $F_1$, which records the length of runs of consecutive bad frames and a factor $R_2$, the good frame rate.

Therefore, the statistical representation, according to the invention may comprise one or more sample distributions for the number of residual errors in different FEC classes { $E_1$, $E_2$, ... }, one or more sample distributions for the length of runs of consecutive frames with the same classification { $F_1$, $F_2$, ... }, and one or more frame classification rates { $R_1$, $R_2$, ... }.

While designing a sample distribution, it is desirable to provide sufficient symbols to represent all possible values of each bin. However, once the link quality measurement is complete, it may be useful to reduce the total number of symbols required to store the distributions and rate factors that constitute the characterisation of the link quality. Distributions can be normalised by scaling all of the bin values by a common factor. If the scaling factor is proportional to the number of samples observed, the normalised distribution is said to be a frequency distribution. The advantage of normalizing a distribution prior to storage or transmission is that bin values can be limited to a maximum value, and therefore the number of symbols required to represent each bin is independent of the original number of samples. If the bins constituting a sample distribution are considered as a vector, it will be clear to a person skilled in the art of signal processing that vector quantisation techniques can be used to reduce the number of symbols required to represent a distribution. Similarly, scalar quantisation techniques can be used to reduce the number of symbols required to represent a sample distribution bin or a rate factor. It should be noted that, by its definition, the process of quantisation introduces errors into the value or values of the scalar or vector being quantised. An alternative method of data reduction would be the use of one of many well-known lossless data compression techniques.

Hence, in an additional arrangement of the invention, means are provided to reduce the number of symbols required to represent a link quality measure of the type described in one of the preceding arrangements of the invention. The reduction means may include, but is not limited to, a combination of one or more of the following techniques:

- normalising one or more distributions;
- applying vector quantisation techniques to one or more distributions;
- applying lossless data compression techniques to one or more distributions;
- applying scalar quantisation techniques to one or more of the bins of a sample distribution or one or more rate factors.

Four methods are now described for generating a measure of perceived transmission performance from the statistical representation of the transmission error characteristics described above.

According to a first method, the statistical representation of link quality is directly mapped to a measure of the perceived transmission quality of the channel. An example of this would be a weighted sum of the bins of the set of sample distributions $\{ F_1, F_2, ... \}$ and rate factors $\{R_1, R_2, \cdots \}$, if used. Hence, a measure of perceived transmission quality M can be defined as:

$$M = a_{1,1}B_{1,1} + a_{1,2}B_{1,2} + .. + a_{1,N}B_{1,N} + a_{2,1}B_{2,1} + a_{2,2}B_{2,2} + ..$$

$$+ a_{2,N}B_{2,N} + .. + a_{M,1}B_{M,1} + a_{M,2}B_{M,2} + .. a_{M,N}B_{M,N}$$

$$+ b_1R_1 + b_2R_2 ..$$

where $a_{i,j}$ is a weight, $b_i$ is a weight, $B_{i,j}$ is the jth bin of sample distribution $F_i$, N is the number of bins in each distribution and M is the number of distributions.

A feature of this method is that the set of weights $\{ a_{1,1}, ... a_{M,N}, b_1, b_2, .. \}$ can be optimised for a particular signal decoder and associated error concealment algorithm.

Other methods of mapping include, but are not limited to, regression, non-linear mappings, neural networks, radial basis function networks, estimators and pattern recognition techniques.

Means for directly mapping radio link parameters to perceived quality are described in US patent application 6157830. The present invention would provide an enhancement to this scheme by providing a specific means of producing a compact representation of the link quality information.

According to a second method, the statistical representation of the link quality is used to retrieve a pre-calculated measure of perceived transmission quality. Means for such retrieval are described in German patent application DE 4324292 and International patent application WO 01/97414. The present invention provides enhancements to these two schemes by providing a specific means of producing a compact statistical representation of transmission error characteristics.

According to a third method, the statistical representation of transmission error characteristics is used to degrade a copy of a test signal. In the case of a speech transmission system, this signal would be speech or a test signal representing the main components of human speech, such as that described in European patent application EP0705501. In the case of a video transmission system the test signal would be a sequence of still or moving images. The perceived transmission quality of the communication system is derived by comparing the degraded test signal and an undegraded copy using an intrusive measurement system such as that described in European Patent 0647375, granted on 14th October 1998.

In a fourth method which is a variation of the third method, the statistical representation of transmission error characteristics is used to degrade a copy of a test signal. The perceived transmission quality of the communication system is derived directly from the degraded test signal using a non-intrusive measurement system, such as that described in "Non-intrusive speech quality assessment using vocal-tract models, Gray P.; Hollier M.P.; and Massara. R.E.; IEE Proceedings - Vision, Image and Signal Processing, 147 (6), 493-501, December 2000."

**Claims**

1. A method of measuring transmission error characteristics of a communications channel employing forward error correction, comprising the steps of

   a) transmitting a coded data sequence comprising a sequence of symbols corresponding to a known data sequence via said communications channel;
   b) receiving a possibly degraded version of said coded data sequence via said communications channel to provide a received data sequence at a receiver;
   c) generating a coded data sequence corresponding to said known data sequence at the receiver to provide a generated sequence at the receiver;
   d) comparing the generated sequence to the received sequence to provide error characterisation information comprising a sequence of symbols ; and
   e) updating a statistical representation of the transmission error characteristics according to said error characterisation information wherein steps a) to e) are performed at least twice.

2. A method according to claim 1, in which the statistical representation comprises a number of symbols which is independent of the number of sequences used to generate said statistical representation.

3. A method according to claim 1 or claim 2, in which the symbols of the error characterisation information are divided into one or more classes and in which the statistical representation comprises a first set of one or more members, each member of the first set relating to errors occurring in an associated class.

4. A method according to claim 3, in which a member of the first set comprises a sample distribution representing the distribution of the number of residual symbol errors occurring in the class associated with said member.

5. A method according to claim 4, in which a member of the first set comprises a rate factor corresponding to the number or proportion of symbols errors in the class associated with said member.

6. A method according to any one of the preceding claims, further comprising the steps of

   f) receiving a frame via said communications channel
   g) classifying the frame according to errors in the frame to provide a frame classification;
   h) updating the statistical representation of the transmission error characteristics according to said frame classification, wherein steps f) to h) are preformed at least twice.

7. A method according to claim 6, in which said statistical representation comprises a second set of one or more members, each member of the second set relating to an associated classification.

8. A method according to claim 7, in which a member of the second set comprises a sample distribution representing the distribution of the number of consecutive frames which are classified as having the frame classification associated with said sample distribution and in which said frame classification is used to update the sample distribution of the set related to said frame classification.

9. A method according to claim 8, in which the in which a member of the second set comprises a rate factor corresponding to the number or proportion of frames which are classified as having the frame classification associated with said member

10. A method according to any one of the preceding claims, further comprising the step of

    generating a compressed statistical representation in dependence upon said statistical representation.

11. A method according to any one of the preceding claims, further comprising the step of transmitting the statistical representation of the transmission error characteristics to a receiver.

12. A method according to any one of claims 1 to 10, further comprising the step of transmitting the compressed statistical representation of the transmission error characteristics to a receiver.

**13.** A method of measuring perceived transmission performance of a communications channel comprising the steps of

measuring transmission error characteristics according to the method of any one of the preceding claims;
generating the perceived transmission performance according to the transmission error characteristics.

**14.** A method according to claim 13, in which the generating step comprises the sub steps of

degrading a test data sequence according to said transmission error characteristics to provide a degraded test data sequence;
generating the perceived transmission performance according to said degraded test data sequence.

**15.** A method according to claim 14, in which the generating sub step comprises the sub step of comparing the test data sequence with the degraded test data sequence.

**16.** A method according to claim 13, in which the generating step comprises the sub step of

retrieving a pre-calculated measure of perceived transmission performance from a store relating measures of perceived transmission performance to statistical representations of transmission error characteristics.

**17.** An apparatus for measuring transmission error characteristics of a communications channel employing forward error correction comprising

a receiver (20) arranged to receive a possibly degraded version of a coded data sequence comprising a sequence of symbols corresponding to a known data sequence transmitted via said communications channel to provide a received data sequence;
means (41) arranged to generate a coded data sequence corresponding to said known data sequence at the receiver to provide a generated sequence;
a comparator (42) arranged to compare the generated sequence to the received sequence to provide error characterisation information comprising a sequence of symbols ; and
means (46) arranged to update a statistical representation of the transmission error characteristics according to said error characterisation information.

**18.** An apparatus according to claim 17, further comprising

a receiver arranged to receive a frame via said communications channel
a classifier arranged to classify the frame according to errors in the frame to provide a frame classification;
means arranged to update the statistical representation of the transmission error characteristics according to said frame classification.

**19.** An apparatus according to claim 17 or claim 18, further comprising

means (44) arranged to generate a compressed statistical representation in dependence upon said statistical representation.

**20.** An apparatus for measuring perceived transmission performance of a communications channel comprising

an apparatus according to one of claims 17,18 or 19;
means (52,63) arranged to receive said transmission error characteristics and arranged to generate the perceived transmission performance according to the transmission error characteristics.

Fig. 1.

Fig. 2

20 receiver
21
22
23

10 transmitter
11
12
13

31 known data sequence
32 known coded data sequence
41 copy of known data sequence

42
46
44
48
43
51
61
52
62
63

X

$B_{30}$  $B_{31}$  $B_{32}$  $B_{33}$  $B_{34}$  $B_{35}$  $B_{36}$

Fig. 3a

Y

$B_{31}$  $B_{32}$  $B_{33}$  $B_{34}$  $B_{35}$  $B_{36}$

Fig. 3b

| | European Patent Office | EUROPEAN SEARCH REPORT | Application Number<br>EP 02 25 3030 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br><br><br><br><br><br><br>Y | US 5 802 105 A (TIEDEMANN JR EDWARD G ET AL) 1 September 1998 (1998-09-01)<br><br>* abstract *<br>* column 6, line 13 - line 44 *<br>* column 7, line 5 - line 18 *<br>* column 8, line 1 - line 49 *<br>* figure 2A *<br>* figure 2B *<br>* table IV * | 1,2,4-6,<br>8,9,17,<br>18<br><br><br><br><br><br><br>3,7,<br>10-16,<br>19,20 | H04L1/20<br>H04L1/24 |
| Y | EP 0 798 888 A (NOKIA MOBILE PHONES LTD) 1 October 1997 (1997-10-01)<br>* abstract *<br>* page 2, line 2 - line 6 *<br>* page 4, line 34 - line 36 *<br>* page 6, line 41 - line 44 *<br>* figure 6 * | 3,7 | |
| Y | WO 01 78220 A (KATZ MARCOS ;NOKIA CORP (FI); YLITALO JUHA (FI))<br>18 October 2001 (2001-10-18)<br>* page 5, line 3 - line 6 *<br>* page 7, line 17 - page 8, line 7 * | 10-12,19 | TECHNICAL FIELDS SEARCHED (Int.Cl.7)<br>H04L<br>H04B<br>H04M<br>H04Q |
| Y,D | WO 01 97414 A (HOLLIER MICHAEL PETER ;GRAY PHILIP (GB); BRITISH TELECOMM (GB); RE)<br>20 December 2001 (2001-12-20)<br>* abstract *<br>* page 4, line 32 - page 5, line 21 * | 13-16,20 | |
| A | WO 99 59273 A (HILLIER ADRIAN PAUL ;RICHARDSON ANDREW JAMES (GB); SIMOCO INT LTD) 18 November 1999 (1999-11-18)<br>* abstract * | 1-9,17,<br>18 | |

-/--

The present search report has been drawn up for all claims

| Place of search | Date of completion of the search | Examiner |
|---|---|---|
| MUNICH | 27 September 2002 | Baltersee, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 02 25 3030

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | EP 1 067 730 A (CIT ALCATEL) 10 January 2001 (2001-01-10) * abstract * ----- | 1,17 | |

TECHNICAL FIELDS
SEARCHED (Int.Cl.7)

The present search report has been drawn up for all claims

| Place of search | Date of completion of the search | Examiner |
|---|---|---|
| MUNICH | 27 September 2002 | Baltersee, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 25 3030

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2002

| Patent document cited in search report | | Publication date | Patent family member(s) | | Publication date |
|---|---|---|---|---|---|
| US 5802105 | A | 01-09-1998 | AU | 706824 B2 | 24-06-1999 |
| | | | AU | 4371196 A | 19-06-1996 |
| | | | BR | 9510001 A | 13-01-1998 |
| | | | CA | 2206251 A1 | 06-06-1996 |
| | | | CN | 1174640 A | 25-02-1998 |
| | | | EP | 0806101 A1 | 12-11-1997 |
| | | | FI | 972208 A | 28-07-1997 |
| | | | JP | 10510121 T | 29-09-1998 |
| | | | RU | 2142197 C1 | 27-11-1999 |
| | | | WO | 9617454 A1 | 06-06-1996 |
| | | | ZA | 9510109 A | 06-06-1996 |
| EP 0798888 | A | 01-10-1997 | GB | 2311699 A | 01-10-1997 |
| | | | EP | 0798888 A2 | 01-10-1997 |
| WO 0178220 | A | 18-10-2001 | FI | 20000853 A | 11-10-2001 |
| | | | AU | 5483801 A | 23-10-2001 |
| | | | WO | 0178220 A1 | 18-10-2001 |
| WO 0197414 | A | 20-12-2001 | WO | 0197414 A1 | 20-12-2001 |
| WO 9959273 | A | 18-11-1999 | AU | 3941599 A | 29-11-1999 |
| | | | WO | 9959273 A1 | 18-11-1999 |
| | | | GB | 2337425 A ,B | 17-11-1999 |
| EP 1067730 | A | 10-01-2001 | EP | 1067730 A1 | 10-01-2001 |

EPO FORM P0459

For more details about this annex : see Official Journal of the European Patent Office, No. 12/82